# EUROPÄISCHE PATENTANMELDUNG

(11) **EP 0 899 932 A2**
(43) Veröffentlichungstag der Anmeldung: **03.03.1999**
(21) Anmeldenummer: 98114548.5
(22) Anmeldetag: 03.08.1998
(51) Int. Cl.: H04M 11/06, H04L 12/64, H04M 3/50

(54) **Modem**

(30) Priorität: 22.08.1997 DE 19736648
(71) Anmelder: SIEMENS AKTIENGESELLSCHAFT, 80333 München (DE)
(72) Erfinder: Terschluse, Markus, 81673 München (DE)

(57) **Zusammenfassung**

Es ist eine Datenübertragungsvorrichtung mit einem Teilnehmeranschluß für eine Telefonteilnehmerleitung, einem Datenanschluß zur Verbindung mit einem Computer, einem Modulatorteil zum Umsetzen der vom Computer empfangenen digitalen Daten in ein Sendesignal, das zur Übertragung über die Telefonteilnehmerleitung geeignet ist, und einem Demodulatorteil zum Umsetzen des von der Telefonteilnehmerleitung empfangenen Empfangssignals in digitale Daten, offenbart. Die Datenübertragungsvorrichtung weist eine Einrichtung zur Erfassung eines Sondersignals auf, das zeitweise im Empfangssignal enthalten ist. Das Sondersignal ist insbesondere ein Anklopfsignal, das in einer Vermittlungsstelle während eines wartenden Anrufs auf der Teilnehmerleitung abgegeben wird.

## Beschreibung

Die Erfindung betrifft eine Datenübertragungsvorrichtung nach dem Oberbegriff von Patentanspruch 1 und eine Anordnung, bei der eine solche Datenübertragungsvorrichtung eingesetzt wird.

Datenübertragungsvorrichtungen, mittels derer ein Computer über eine gewöhnliche Telefonleitung mit einem anderen Computer in Verbindung treten kann, werden gewöhnlich als Modems bezeichnet. Derartige Modems kommen häufig in Verbindung mit einem PC zum Einsatz. Damit ist es beispielsweise möglich, daß der PC über das gewöhnliche Telefonnetz mit einem anderen Computer oder einem Netzwerk von Computern Verbindung aufnimmt, die ihrerseits an das Telefonnetz angeschlossen sind. Es kommt dabei nicht selten vor, daß sich solche Verbindungen zwischen dem PC eines Anwenders und einem Datennetz, wie etwa dem Internet, über längere Zeiträume erstrecken. Da der Anwender des PC, insbesondere bei Gebrauch im privaten Bereich häufig nur über eine Telefonleitung verfügt, die sowohl der herkömmlichen Sprachkommunikation als auch der Datenkommunikation mittels des am Computer angeschlossenen Modems dienen soll, ist der Anwender während einer laufenden Datensitzung für eingehende Anrufe im Sprachtelefondienst nicht erreichbar.

Aus der US-PS 5,493,609 ist ein Telekommunikationssystem zum automatischen Schalten zwischen einer Sprach- und einer Datenverbindung bekannt geworden. Dabei kann auf einer herkömmlichen Telefonleitung zwischen Sprachmodus und einer Vielzahl von Datenmodi dynamisch geschaltet werden. Im Ausgangsmodus erfolgt Sprachbetrieb zwischen zwei Teilnehmern. Wenn ein Teilnehmer ein Startsignal abgibt, wird der Sprachbetrieb beendet und in einen Datenmodus geschaltet.

Moderne Telefonvermittlungsanlagen bieten dem Telefonteilnehmer ein Merkmal, das als 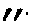 Anklopfen" bekannt ist. Wenn dieses Merkmal aktiviert ist, wird dem Teilnehmer während eines laufenden Telefongesprächs ein akustisches Signal eingeblendet, das diesem Teilnehmer anzeigt, daß an der Vermittlungsstelle ein weiterer Anruf eingegangen ist. Der Teilnehmer hat dann die Möglichkeit, der Vermittlungsstelle zu signalisieren, ob er das bestehende Gespräch abbrechen oder unterbrechen möchte, um das wartende Gespräch anzunehmen, oder ob er mit dem laufenden Gespräch fortfahren mochte. Das Vorliegen eines wartenden Anrufs wird dem Teilnehmer dadurch angezeigt, daß dem von der Vermittlungsstelle kommenden Gesprächssignal ein Tonsignal beigemischt wird, das der Teilnehmer während des laufenden Gesprächs akustisch wahrnimmt.

Handelt es sich jedoch bei der laufenden Verbindung um eine Datenverbindung mittels Modem, so besteht für den Anwender des PC keine Möglichkeit, ein gegebenenfalls im Signal, das von der Vermittlungsstelle an das an die Teilnehmerleitung angeschlossene Modem gesendet wird, vorhandenes Anklopfsignal wahrzunehmen. Es besteht vielmehr sogar die Gefahr, daß das dem Empfangssignal beigemischte Anklopfsignal Fehler bei der Demodulation des Empfangssignals hervorruft. Beim Anwender einer Datenkommunikation besteht daher der Wunsch, daß auch während einer laufenden Datenkommunikation die Annahme eines Telefongesprächs möglich ist, ohne daß dadurch die Datenkommunikation unnötig beeinträchtigt wird.

Aus der US 5,519,767 ist ein Sprach- und Datenmodem mit der Funktionalität 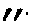 Call Waiting" offenbart. Dieses Modern erkennt zwar ein Call Waiting Signal, berücksichtigt es jedoch nicht in der nachfolgenden Datenverarbeitung des Modems.

Das der Erfindung zugrunde liegende Problem besteht daher darin, die Zeitweise einer Telefonteilnehmerleitung beigemischten besonderen Signale bei einer Datenkommunikation auf der Teilnehmerleitung zu berücksichtigen.

Das Problem wird gelöst mit einer Datenübertragungsvorrichtung mit den Merkmalen von Patentanspruch 1. Bevorzugte Ausführungsbeispiele sind in den Unteransprüchen angegeben.

In einer Ausführungsform weist die Datenübertragungsvorrichtung einen Teilnehmeranschluß für eine Telefonteilnehmerleitung eines Telefonnetzes und einen Datenanschluß zur Verbindung mit einem Computer auf. Die Datenübertragungsvorrichtung setzt die vom Computer empfangenen digitalen Daten in einem Modulatorteil in ein Sendesignal um, das auf die Telefonteilnehmerleitung gelegt wird, und setzt das auf der Telefonteilnehmerleitung empfangene Empfangssignal in einem Demodulatorteil in digitale Daten um, die an den Computer übermittelt werden. Darüberhinaus ist eine Signalerfassungseinrichtung vorgesehen, die ein im Empfangssignal zeitweise enthaltenes Sondersignal erfaßt. Das Sondersignal wird dabei von der Vermittlungsstelle des Telefonnetzes erzeugt. Die von einer Vermittlungsstelle erzeugten Sondersignale treten gegenüber der Datenübertragungsvorrichtung willkürlich und zu nicht vorhersehbaren Zeitpunkten auf. Derartige Sondersignale sind dem Empfangssignal in einem bestimmten Frequenzbereich beigemischt.

Es wird dabei besonders bevorzugt, daß die Signalerfassungseinrichtung eine Einrichtung aufweist, die eine Korrelationsfunktion berechnet. Dabei wird das Empfangssignal mit einer Sondersignalform korreliert. In einem besonders bevorzugten Ausführungsbeispiel weist die Einrichtung, die eine Korrelationsfunktion ausführt, einen Speicher auf. In diesem Speicher sind Sondersignalformen abgelegt, die im Verlauf einer Telefonverbindung zu erwarten sind. In einem besonders bevorzugten Ausführungsbeispiel gibt die Signalerfassungseinrichtung bei Vorhandensein eines Sondersignals ein Signal ab, das von der mittels der Signalerfassungseinrichtung erfaßten Sondersignalform abhängt. Dies hat den Vorteil, daß abhängig von der eintreffenden Sondersignalform in unterschiedlicher Weise verfahren werden kann.

In einem weiteren bevorzugten Ausführungsbeispiel ist dem Demodulatorteil der Datenübertragungsvorrichtung eine Kompensationseinrichtung vorgeschaltet, die ein Sondersignal aus dem Empfangssignal entfernt, wenn dieses von der Signalerfassungseinrichtung erfaßt wurde. Dabei wird besonders bevorzugt, daß die Kompensationseinrichtung einen Pufferspeicher zum Zwischenspeichern des Empfangssignals und eine Einrichtung zur Amplituden- und Phasenadaption des zwischengespeicherten Empfangssignals aufweist. Dabei spricht die Einrichtung zur Amplituden- und Phasenadaption auf ein Signal der Signalerfassungseinrichtung an, um aus dem in der Zwischenzeit gespeicherten Empfangssignal das Sondersignal zu entfernen. Auf diese Weise wird dem Demodulator ein Signal zugeführt, in dem kein Sondersignal enthalten ist und das sich daher optimal zur Demodulation eignet. Die von der Gegenstelle des Modems abgesandten Daten können daher mit höherer Zuverlässigkeit im Demodulator wiedergewonnen werden.

Die Einrichtung zur Amplituden- und Phasenadaption weist vorzugsweise eine Tabelle mit gespeicherten, zu erwartenden Sondersignalformen auf. In einem Funktionsgenerator werden Kompensationssignale ausgehend von den in der Tabelle gespeicherten Sondersignalformen und abhängig von der gerade erfaßten Sondersignalform erzeugt. In einer Meßeinrichtung wird das zwischengespeicherte Empfangssignal mit dem Kompensationssignal des Funktionsgenerators verknüpft, woraus sich ein Signal ergibt, in dem die gerade erfaßte Sondersignalform nicht mehr oder nur noch mit reduzierter Leistung enthalten ist.

Als Sondersignalformen werden bevorzugt ein in einer Vermittlungsstelle erzeugtes Anklopfsignal und/oder die dort erzeugte Anruferidentifikation erfaßt. Bei Erfassung eines derartigen Signals wird vorzugsweise dem Computer ein dementsprechendes Signal übermittelt. Alternativ oder zusätzlich dazu wird bei Erfassung eines derartigen Sondersignals ein akustisches Signal ausgelöst. Eine weitere Sondersignalform ist das Taktsignal, mit dem ein teilnehmerseitig angeschlossener Gebührenzähler angesteuert werden kann.

In einer besonders bevorzugten Ausführungsform der Erfindung weist die Datenübertragungsvorrichtung einen Anschluß für ein Sprachtelefonendgerät auf. Es wird dann besonders bevorzugt, daß bei Erfassung des Sondersignals ein Klingelsignal an das Sprachtelefonendgerät über den Endgeräteanschluß abgegeben wird.

In einer besonders bevorzugten Ausführungsform weist die Datenübertragungsvorrichtung eine Verbindungssteuerungseinrichtung auf, die eine bestehende Datenverbindung abbrechen kann oder unterbrechen und wieder aufnehmen kann. Der Verbindungssteuerungseinrichtung wird dazu ein Signal zugeführt, das anzeigt, ob die Datenverbindung unterbrochen, abgebrochen oder aufrecht erhalten werden soll. Dabei ist besonders bevorzugt, daß dieses Signal durch ein angeschlossenes Sprachtelefonendgerät erzeugt wird, das bei Abnahme des Telefonhörers an die Verbindungssteuerungseinrichtung ein Unterbrechungssignal abgibt und bei Auflegen des Telefonhörers ein Wiederaufnahmesignal abgibt. Ein derart an eine Datenübertragungsvorrichtung angeschlossenes Telefon verhält sich daher bei Eingang eines Anklopfsignals wie eine herkömmliches Telefon, das durch ein akustisches Signal einen wartenden Anruf anzeigt. Mit Abnahme des Telefonhörers wird der Verbindungssteuerungseinrichtung signalisiert, daß der wartende Anruf angenommen werden soll, das heißt die Datenverbindung unterbrochen werden soll. Die Verbindungssteuerungseinrichtung schaltet dann die Telefonteilnehmerleitung zu dem an der Datenübertragungsvorrichtung angeschlossenen Telefon durch.

Besonders bevorzugt wird schließlich eine Anordnung einer solchen Datenübertragungsvorrichtung und eines Computers, der eine Spracheingabeeinrichtung und eine Sprachausgabeeinrichtung aufweist. Damit ist es möglich, das wartende Telefongespräch über die Spracheingabe- und Sprachausgabeeinrichtung des Computers zu führen. Die Funktionen der Gesprächsannahme und Gesprächsbeendigung können dem Computer mittels anderer Eingabeeinrichtungen, wie etwa einer Tastatur oder einer Maus mitgeteilt werden. Es wird dabei besonders bevorzugt, daß ein eintreffendes Sondersignal visuell an einer Ausgabeeinrichtung des Computers, wie etwa dem Bildschirm, dargestellt wird. Die Funktionalität ist dabei vorzugsweise von der Anwendungssoftware des Computers zu berücksichtigen. Es wird dabei besonders bevorzugt, daß der Computer eine Einrichtung zur Echokompensation aufweist, wie sie im Telefonbau prinzipiell bekannt ist.

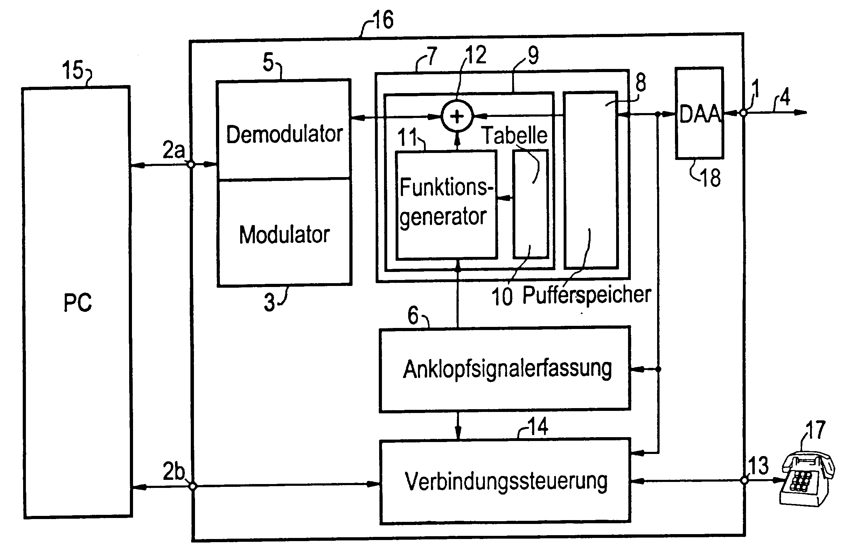

Weitere Vorteile, Merkmale und Anwendungsmöglichkeiten der Erfindung ergeben sich aus der nachfolgenden Beschreibung eines Ausführungsbeispiels in Verbindung mit der einzigen Figur, die eine bevorzugte Anordnung mit einer bevorzugten Datenübertragungsvorrichtung veranschaulicht.

In der Figur ist ein Modern 16 dargestellt, das über die Anschlüsse 2a und 2b mit einem Computer 15 verbunden ist. Der Computer ist dabei beispielhaft vom Typ eines PC dargestellt. Das Modem 16 weist darüber hinaus einen Anschluß 1 auf, an dem eine Teilnehmerleitung 4 eines Telefonnetzes angeschlossen ist. Der Teilnehmeranschluß 1 und die Datenanschlüsse 2 ermöglichen den Austausch von Signalen und Daten in beide Richtungen.

Als Hauptkomponenten weist das Modem 16 einen Modulator 3 und einen Demodulator 5 auf. Der Demodulator 5 empfängt die von der Teilnehmerleitung 4 herrührenden Signale, demoduliert diese und sendet die daraus gewonnenen Daten über den Anschluß 2a an den PC 15. Umgekehrt moduliert der Modulator 3 die vom PC 15 kommenden Daten und gibt sie über den Teilnehmeranschluß 1 ab (Signalweg ist im einzelnen nicht dargestellt, erfolgt jedoch auf übliche Weise). Das Modem 16 weist an seinem Teilnehmeranschluß 1 einen Wandler 18 auf, der die analogen Signale auf der Teilnehmerleitung 4 in eine digitale Darstellung umwandelt und die vom Modem 16 abzugebenden digital dargestellten Signale in analoge Signale umwandelt. Weiterhin übernimmmt der Wandler 18 die 2-Draht/4-Draht-Wandlung. Der Wandler 18 wird gemeinhin auch als Data Access Arrangement (DAA) bezeichnet.

Das für den Demodulator 5 bestimmte Empfangssignal wird dabei einerseits einer Kompensationseinrichtung 7 und andererseits einer Erfassungseinrichtung 6 zugeführt, wobei letztere das Vorhandensein eines Anklopfsignals erfaßt. Wenn die Erfassungseinrichtung 6 ein Anklopfsignal erfaßt, gibt sie ein Signal an die Kompensationseinrichtung 7, die das im Empfangssignal enthaltene Anklopfsignal entfernt. Die Kompensationseinrichtung 7 gibt dann das um das Anklopfsignal bereinigte Empfangssignal an den Demodulator zur weiteren Verarbeitung weiter.

Die Anklopfsignalerfassungseinrichtung 6 weist eine Einrichtung zur Durchführung einer Korrelation auf. Dabei wird das fortlaufend eingehende Empfangssignal mit einer Vielzahl zu erwartender Sondersignalformen korreliert. Mögliche Signalformen sind dabei beispielsweise ein Anklopfsignal, ein Anruferidentifikationssignal oder ein Gebührenzählertaktsignal. Diese Sondersignale haben vorbestimmte Signal formen, die in einer Vermittlungsstelle eines Telefonnetzes erzeugt werden. In einem Speicher der Erfassungseinrichtung 6 sind alle die zu berücksichtigenden Sondersignalformen abgelegt und werden kontinuierlich mit dem Empfangssignal verglichen. Wenn die Korrelationseinrichtung das Vorhandensein eines Sondersignals erfaßt, gibt die Erfassungseinrichtung ein diesem Sondersignal entsprechendes Signal ab.

Die Kompensationseinrichtung 7 weist einen Pufferspeicher 8 auf, in dem das Empfangssignal kontinuierlich zwischengespeichert und damit verzögert wird. Wenn die Erfassungseinrichtung 6 ein bestimmtes Sondersignal erfaßt, erhält ein Funktionsgenerator 11 ein dementsprechendes Signal von der Erfassungseinrichtung 6, woraufhin dieser ein Kompensationssignal erzeugt. In einer Mischeinrichtung 12 werden die im Pufferspeicher 8 verzögerten Empfangssignale und das Kompensationssignal vom Funktionsgenerator 11 verknüpft, woraus sich ein vom Sondersignal bereinigtes Empfangssignal ergibt. Das Ausgangssignal der Mischeinrichtung 12 wird dem Demodulator 5 zugeführt. Der Funktionsgenerator 11 erzeugt das Kompensationssignal, indem er abhängig von der erfaßten Sondersignalform in einer Tabelle 10 diese Sondersignalform nachschlägt, um daraus das Kompensationssignal zu bilden. Die Tabelle 10 enthält daher eine Vielzahl zu erwartender Sondersignalformen.

Die Erfassungseinrichtung 6 gibt bei Erfassung eines Sondersignals auch ein Signal an eine Verbindungssteuerung 14 ab. Die Verbindungssteuerung 14 meldet beispielsweise dem PC 15 über den Anschluß 2b und/oder einem Telefon 17 über den Anschluß 13 das Vorhandensein eines Anklopfsignals. Der PC 15 kann das Vorhandensein eines Anklopfsignals an den Anwender mittels akustischer oder visueller Signale signalisieren. Alternativ oder gleichzeitig kann durch ein Klingelsignal das herkömmliche Sprachtelefon 17 zum Klingeln gebracht werden.

Mit einer derartigen Anordnung ist es beispielsweise möglich, daß während einer laufenden Datenverbindung ohne Störung der Datenverbindung am Modem ein Anklopfsignal eingeht, dieses als solches erkannt wird und damit ein am Modem angeschlossenes Telefon zur Anzeige eines eingehenden Anrufs veranlaßt wird. Der Anwender kann dann entscheiden, ob er diesen Anruf entgegennimmt oder nicht. Bei Annahme des Gesprächs, das heißt Abheben des Telefonhörers, wird dies der Verbindungssteuerung 14 mitgeteilt, woraufhin diese die Datenverbindung unterbricht bzw. parkt (das heißt, die logische Datenverbindung wird gehalten, nur der Datenfluß in beiden Richtungen wird vorübergehend angehalten) und die Telefonteilnehmerleitung 4 zum Telefon 17 durchschaltet. Bei Beendigung des Gesprächs kann die Datenverbindung wieder aufgenommen werden. Alternativ dazu kann der Anwender über den PC 15 mitteilen, daß er die Datenverbindung beenden und nicht wieder aufnehmen möchte, um das wartende Telefongespräch anzunehmen. Das Schalten zwischen der Datenverbindung und dem Telefongespräch erfolgt durch die Verbindungssteuerung 14, die der Vermittlungsstelle über die Teilnehmerleitung 4 mittels entsprechender Signalisierung den jeweiligen Verbindungswunsch mitteilt. Dies erfolgt durch eine DTMF-Signalisierung (Dual-Tone-Multiple-Frequency).

Alternativ kann im PC 15 eine Soundkarte vorgesehen sein, die es ermöglicht, am Computer Spracheingabe und Sprachausgabe vorzunehmen. Es erübrigt sich dann die Bereitstellung eines separaten Telefongeräts 17, weil das wartende Telefongespräch über die Spracheingabe- und Sprachausgabeeinrichtung des PC 15 geführt werden kann. Die Signalisierung der Gesprächsannahme bzw. Gesprächsbeendigung erfolgt dann über die herkömmlichen Eingabeeinrichtungen eines PC 15, wie etwa Tastatur oder Maus. Auf dem PC 15 läuft dabei eine Software, die eine Echokompensation ausführt.

Mit einer derartigen Anordnung ist es dem Teilnehmer eines analogen Telefonanschlusses möglich, während einer Datenverbindung telefonisch erreichbar zu bleiben. Dies ist insbesondere von Bedeutung, da Datenverbindungen häufig sehr lange dauern und der Teilnehmer in dieser Zeit telefonisch nicht erreichbar ist. Durch eine automatische Erkennung eines Anklopfsignals im Modem kann die Anwendungssoftware den Teilnehmer auf den wartenden Anruf aufmerksam machen. Der Anwender kann dann entweder über ein herkömmliches, an das Modem angeschlossene Sprachtelefon oder über Spracheingabe- und Sprachausgabeeinrichtungen des Computer das Gespräch entgegennehmen. Eine Verbindungssteuerung signalisiert abhängig vom Verhalten des Teilnehmers der Vermittlungsstelle, wie die bestehende Datenverbindung behandelt werden soll. Sie wird entweder abgebrochen oder lediglich unterbrochen, um nach Beendigung des Gesprächs wiederaufgenommen zu werden. Wird von der Vermittlungsstelle eine Anruferkennung (Caller-ID), das heißt die Teilnehmernummer des Anrufenden, übermittelt, so kann auch die Teilnehmernummer entweder am PC 15 oder am Telefon 17 angezeigt werden.

Mittels der Kompensationseinrichtung 7 können die dem Empfangssignal beigemischten Sondersignale extrahiert werden, bevor sie dem Demodulator 5 zugeführt werden. In jeweils einer Tabelle der Erfassungseinrichtung 6 und der Kompensationseinrichtung 7 können eine Vielzahl von zu erwartenden Sondersignalformen berücksichtigt werden. Insbesondere können auch verschiedene Signal formen des Anklopfsignals der unterschiedlichen Telefonnetzbetreiber berücksichtigt werden.

### Bezugszeichenliste

- 1: Teilnehmeranschluß
- 2: Datenanschluß
- 3: Modulatorteil des Modems
- 4: Teilnehmerleitung
- 5: Demodulatorteil des Modems
- 6: Signalerfassungseinrichtung
- 7: Kompensationseinrichtung
- 8: Pufferspeicher
- 9: Einrichtung zur Amplituden- und Phasenadaption
- 10: Tabelle mit zu erwartenden Sondersignalformen
- 11: Funktionsgenerator
- 12: Mischeinrichtung (Addierer)
- 13: Endgeräteanschluß für ein Sprachtelefon
- 14: Verbindungssteuerungseinrichtung
- 15: Computer
- 16: Modem
- 17: Telefon
- 18: Analog/Digital- und Digital/Analog-Wandlung

## Patentansprüche

1. Datenübertragungsvorrichtung mit einem Teilnehmeranschluß (1) für eine Telefonteilnehmerleitung (4) eines Telefonnetzes, einem Datenanschluß (2) zur Verbindung mit einem Computer (15), einem Demodulatorteil (5) zum Umsetzen eines von der Telefonteilnehmerleitung (4) empfangenen Empfangssignals in digitale Daten, die an den Computer (15) übermittelt werden, und einer Signalerfassungseinrichtüng (6) zum Erfassen eines zeitweise im Empfangssignal enthaltenen Sondersignals, wobei das Sondersignal von einer Vermittlungsstelle des Telefonnetzes erzeugt ist,
**dadurch gekennzeichnet**, daß
eine dem Demodulatorteil vorgeschaltete Kompensationseinrichtung (7) vorgesehen ist, die bei Erfassung des Sondersignals dieses im wesentlichen aus dem Empfangssignal entfernt.

2. Datenübertragungsvorrichtung nach Patentanspruch 1,
**dadurch gekennzeichnet**, daß
die Kompensationseinrichtung (7) einen Pufferspeicher (8) zum Zwischenspeichern des Empfangssignals und eine Einrichtung (9) zur Amplituden- und Phasenadaption des zwischengespeicherten Empfangssignals aufweist, wobei die Einrichtung zur Amplituden- und Phasenadaption auf ein Signal der Signalerfassungseinrichtung anspricht, um aus dem zwischengespeicherten Empfangssignal das Sondersignal zu entfernen.

3. Datenübertragungsvorrichtung nach Patentanspruch 2,
**dadurch gekennzeichnet**, daß
die Einrichtung (9) zur Amplituden- und Phasenadaption eine Tabelle (10) mit gespeicherten, zu erwartenden Sondersignalformen, einen Funktionsgenerator (11) zur Erzeugung eines Kompensationssignals aus einer in der Tabelle (10) gespeicherten Sondersignalform und eine Mischeinrichtung (12) zur Verknüpfung des zwischengespeicherten Empfangssignals mit dem Kompensationssignal aufweist.

4. Datenübertragungsvorrichtung nach einem der vorhergehenden Patentansprüche,
**dadurch gekennzeichnet**, daß
das Sondersignal ein in einer Vermittlungsstelle erzeugtes Anklopfsignal aufweist.

5. Datenübertragungsvorrichtung nach einem der vorhergehenden Patentansprüche,
**dadurch gekennzeichnet**, daß
das Sondersignal eine in einer Vermittlungsstelle erzeugte Anruferidentifikation (Caller ID) aufweist.

6. Datenübertragungsvorrichtung nach einem der Patentansprüche 4 oder 5,
**dadurch gekennzeichnet**, daß
die Signalerfassungseinrichtung (6) bei Erfassung des Sondersignals ein Signal abgibt, das an den Computer (15) übermittelt wird.

7. Datenübertragungsvorrichtung nach einem der Patentansprüche 4 oder 5,
**dadurch gekennzeichnet**, daß
die Signalerfassungseinrichtung (6) bei Erfassung des Sondersignals ein akustisches Signal auslöst.

8. Datenübertragungsvorrichtung nach einem der vorhergehenden Patentansprüche,
**weiterhin gekennzeichnet** durch einen Endgeräteanschluß (13) für ein Sprachtelefonendgerät.

9. Datenübertragungsvorrichtung nach Patentanspruch 8 in Verbindung mit einem der Patentansprüche 4 oder 5,
**dadurch gekennzeichnet**, daß
bei Erfassung des Sondersignals am Endgeräteanschluß (13) ein Klingelsignal abgeben wird.

10. Datenübertragungsvorrichtung nach einem der vorhergehenden Patentansprüche,
**weiterhin gekennzeichnet** durch eine Verbindungssteuerungseinrichtung (14), die eine bestehende Datenverbindung abbrechen kann oder unterbrechen und wiederaufnehmen kann, wobei die Verbindungssteuerungseinrichtung (14) ein Signal erhält, das anzeigt, ob die Datenverbindung unterbrochen, abgebrochen oder aufrechterhalten werden soll.

11. Datenübertragungsvorrichtung nach Patentanspruch 11 in Verbindung mit Patentanspruch 9,
**dadurch gekennzeichnet**, daß
bei Gesprächsannahme am Sprachtelefonendgerät die Verbindungssteuerungseinrichtung (14) die bestehende Datenverbindung unterbricht und bei Gesprächsende wiederaufnimmt.
